# EUROPÄISCHE PATENTANMELDUNG

(11) **EP 4 815 259 A1**
(43) Veröffentlichungstag der Anmeldung: **30.09.2026**
(21) Anmeldenummer: 25166415.7
(22) Anmeldetag: 26.03.2025
(51) Int. Cl.: H02K 1/02, H02K 15/022

(54) **VERFAHREN ZUR HERSTELLUNG EINES STATORS EINES AXIALFLUSSMOTORS, STATOR EINES AXIALFLUSSMOTORS UND AXIALFLUSSMOTOR**

(71) Anmelder: Siemens Aktiengesellschaft, 80333 München (DE)
(72) Erfinder: Denneler, Stefan, 81371 München (DE); Rieger, Gotthard, 80636 München (DE); Schmidt, Alexander, 84034 Landshut (DE); Schuh, Carsten, 85598 Baldham (DE); Soller, Thomas, 94469 Deggendorf (DE)
(74) Vertreter: Siemens Patent Attorneys

(57) **Zusammenfassung**

Die Erfindung betrifft ein Verfahren zu Herstellung eines Stators (2) eines Axialflussmotor (4) mit mehreren auf einer Rückflussplatte (6) axial ausgerichteten Kernen (8) und umfasst folgende Schritte:
- Bandgießen (10) eines Schlickers (12) zu einem pulvermetallurgischen Band (14) im Grünzustand,
- wobei der Schlicker (10) als funktionale Bestandteile erste Eisenpartikel umfasst,
- Herstellen eines Kerngrünkörper (16) mittels Laminierens des pulvermetallurgischen Bandes (14),
- erzeugen einer pulvermetallurgische Masse (18), die als funktionale Bestandteile zweite Eisenpartikel (20) umfasst,
- Herstellen eines Grünkörpers (22) der Rückflussplatte (6), mittels eines pulvermetallurgischen Formgebungsverfahrens (24),
- Aufsetzen der Kerngrünkörper (16) auf den Grünkörper (22) der Rückflussplatte (6) in der Art, dass Normalen des laminierten Bandes (14) im Kerngrünkörper (16) in einer Ebene senkrecht zur Motorachse (26) verlaufen, wodurch ein Statorgrünkörper (28) erzeugt wird,
- Wärmebehandlung des Statorgrünkörpers (28) in Form eines Sinterprozesses (30), wodurch eine stoffschlüssige Sinterverbindung (32) zwischen Kerngrünkörper (16) und Grünkörper (22) der Rückflussplatte (6) erzeugt wird und der Statorgrünkörper (28) in den Stator (2) übergeführt wird.

## Beschreibung

Die Erfindung betrifft ein Verfahren zur Herstellung eines Stators eines Axialflussmotors nach dem Oberbegriff des Patentanspruchs 1, einen Stator eines Axialflussmotors nach dem Oberbegriff des Patentanspruchs 12 sowie einen Axialflussmotor nach Patentanspruch 15.

Axialflussmotoren unterscheiden sich von herkömmlichen Elektromotoren bzw. Generatoren darin, dass der magnetische Fluss bzw. die magnetischen Felder in axialer Richtung ausgebildet sind, sich also parallel zur Motorwelle bzw. zur Motorachse erstrecken. Hierbei weist der Stator des Axialflussmotors ein weichmagnetisches Material auf, das leicht ummagnetisiert werden kann. Der Stator ist dabei so ausgebildet, dass Statorkerne vorgesehen sind, die in ihrer Einbaulage so angeordnet sind, dass der magnetische Fluss durch die Kernachse verläuft und die Kernachse wiederum parallel zur Motorachse ausgebildet ist. Um den magnetischen Fluss zu schließen, ist eine magnetische Rückschlussplatte (Joch) notwendig, auf der die magnetischen Kerne angeordnet sind und durch die der magnetische Fluss von einem Kern zum Permanentmagnet oder einem anderen bewickelten Kern geleitet wird. Somit weist ein Stator für einen Axialflussmotor mehrere Kerne auf, die auf der Rückschlussplatte montiert sind, wobei die Kerne ausgehend von der Rückschlussplatte in beide axiale Richtungen im Axialflussmotor verlaufen können. Das heißt, eine Rückflussplatte kann dabei Kerne in die eine Richtung und in ihre andere Richtung aufweisen. Der zweite Fall bringt hierbei einen zweiten Rotor des Axialflussmotors mit sich. Dies wäre ein Axialflussmotor mit Doppelrotor.

Nun weisen Axialflussmotoren häufig das Problem auf, dass bei ihrer Bauweise im Stator hohe Wärmeeinträge auftreten, die aufgrund der bestehenden Bauweise schlecht abgeführt werden können. Das Wärmeproblem bei Axialflussmotoren ist somit eine stetige Herausforderung bei der Weiterentwicklung dieser Art von hocheffizienten Motoren. Daher ist es nötig, die Konstruktion der Motoren so zu gestalten, dass der magnetische Fluss, der insbesondere durch den Stator verläuft, so effizient und verlustarm gestaltet wird, wie nur möglich. Bisher wurde versucht, für die Kerne und das Material der Rückflussplatte unterschiedliche Materialien zu verwenden. So wird zum Beispiel versucht, insgesamt für den Stator sogenannte Soft Magnetic Composit Materialien (SMC) einzusetzen, die jedoch sehr spröde sind und deren Verluste gegenüber Blechpaketen deutlich erhöht sind. Beim Einsatz konventioneller, gewalzter Bleche führt das Konzept der Axialflusskerne dazu, dass bei jeder mechanischen Bearbeitung zum Beispiel der Biegung von Blechstapeln oder dem Fügen der Rückschlussplatte mit den Kernen eine aufwendige Spannungsarmglühung erfolgen muss. Ferner sind Klebeverbindungen zwischen laminierten Stapeln im Kern sehr empfindlich gegenüber Wärmebehandlungen. Dies führt dazu, dass die Herstellung von Statoren von Axialflussmotoren bisher immer noch sehr aufwendig und somit sehr teuer ist, was neben dem beschriebenen Wärmeproblem bisher eine weitere Verbreitung von Axialflussmotoren großtechnischer Art gebremst hat.

Die Aufgabe der Erfindung besteht darin, ein Verfahren zur Herstellung eines Stators eines Axialflussmotors sowie einen Stator an sich und einen Axialflussmotor bereitzustellen, die gegenüber dem Stand der Technik eine technisch kostengünstige reduzierte Herstellung ermöglichen und dabei eine bessere Magnetflussführung aufweisen, die die Erwärmung des Axialflussmotors bzw. des Stators im Betrieb gegenüber dem Stand der Technik reduziert.

Die Lösung der Aufgabe besteht in einem Verfahren zur Herstellung eines Stators eines Axialflussmotors mit den Merkmalen des Patentanspruchs 1 sowie in einem Stator für einen Axialflussmotor mit den Merkmalen des Patentanspruchs 12 sowie in einem Axialflussmotor mit den Merkmalen des Patentanspruchs 15.

Das erfindungsgemäße Verfahren zur Herstellung eines Stators eines Axialflussmotors nach Patentanspruch 1 ist dabei so ausgestaltet, dass der Stator mehrere auf einer Rückflussplatte axial ausgerichtete Kerne umfasst, die wie folgt zusammengesetzt werden: Zunächst wird mittels Bandgießen (auch Schlickerziehen oder Green-Tape-Verfahren genannt) ein Schlicker zu einem pulvermetallurgischen Band im Grünzustand verarbeitet, wobei der Schlicker als funktionale Bestandteile erste Eisenpartikel umfasst. Des Weiteren folgt das Herstellen eines Kerngrünkörpers mittels Laminierens des pulvermetallurgischen Bandes. Unabhängig davon erfolgt eine Erzeugung einer pulvermetallurgischen Masse, die als funktionaler Bestandteil zweite Eisenpartikel umfasst. Aus dieser pulvermetallurgischen Masse wird ein Grünkörper der Rückschlussplatte des Stators mittels eines pulvermetallurgischen Formgebungsverfahrens erzeugt. Hiernach erfolgt das Aufsetzen der Kerngrünkörper auf den Grünkörper der Rückflussplatte in der Art, dass Normalen des laminierten Bandes im Kerngrünkörper in einer Ebene senkrecht zur Motorachse verlaufen, wodurch ein Statorgrünkörper erzeugt wird. Dies kann auch so ausgedrückt werden, dass die einzelnen Laminatschichten des laminierten Bandes in ihrer Einbaulage bezüglich des Stators senkrecht zur Oberfläche der Rückflussplatte verlaufen und somit entlang der Motorachse verlaufen. Hierauf erfolgt eine Wärmebehandlung des Statorgrünkörpers in Form eines Sinterprozesses, wodurch eine stoffschlüssige Sinterverbindung zwischen dem Kerngrünkörper und dem Grünkörper der Rückschlussplatte erzeugt wird und der Statorgrünkörper in den Statorkern übergeführt wird.

Der Vorteil des beschriebenen Verfahrens zur Herstellung eines Statorkerns für den Axialflussmotor besteht darin, dass im Grünzustand sowohl die Laminatkerne des Stators als auch die Rückschlussplatte in einem gemeinsamen Sinterprozess (in situ) zusammengesetzt werden und endformnah hergestellt werden können (dem Sinterprozess ist in der Regel ein Entbinderungsprozess, also das Austragen von Bindemitteln, die die Grünkörperherstellung ermöglichen, vorangestellt). Dadurch entsteht ein elektrisch und magnetisch verbesserter Kern, was in geringeren magnetischen Verlusten und somit in einer geringeren Wärmeentwicklung innerhalb des Stators resultiert. Durch die Migration, also der Diffusion im Grenzbereich zwischen den Kerngrünkörpern und dem Rückschlussplattengrünkörper während des Sinterprozesses tritt eine stoffschlüssige Verbindung ein, die sowohl eine ausgezeichnete Wärmeleitung aufweist als auch hervorragend den magnetischen Fluss leitet und dabei mechanisch stabil ist. Auch hiermit, also durch die intrinsische Sinterverbindung, werden die magnetischen Eigenschaften des Stators, also geringerer Verlustleistung sowie die Wärmeleitung verbessert, was der Effizienz und der Leistungsfähigkeit des Axialflussmotors im Ganzen zugutekommt.

Üblicherweise werden Kerne für einen Axialflussmotor, die im Weiteren mit einer Spulenwicklung umgeben sind, so ausgestaltet, dass sie als Laminat von einzelnen Magnetblechen hergestellt werden. Wie bezüglich des Verfahrens nach Anspruch 1 beschrieben, wird hier ein schlickergezogenes Band, also ein Green-Tape oder Grün-Tape so zusammengesetzt, dass die Flächen dieses laminierten Bandes entlang der Motorachse verlaufen. Hierbei werden die einzelnen Laminatstrukturen (aus dem Band ausgestanzte Strukturen) üblicherweise aufeinander gestapelt. Hierbei meint Wickeln nicht nur kreisförmiges Wickeln. Vielmehr kann eine vorgegebene Struktur mit parallelen Außenwänden durch einen gezielten Wickelverlauf des Bandes dargestellt werden. In einer vorteilhaften Ausgestaltungsform der Erfindung wird das mittels Bandgießen erzeugte pulvermetallurgische Band im Grünzustand zu dem Kern gewickelt. Auf diese Weise wird die Herstellung des Kernes technisch deutlich einfacher, wobei von der magnetischen Seite dieselben vorteilhaften Wirkungen erzielt werden. Der Kern kann durch das Band also aufgewickelt werden und muss nicht durch die Herstellung einzelner Magnetbleche (bisheriger Stand der Technik) bzw. ausgestanzter pulvermetallurgischer Grünteile zusammengesetzt werden. Dies reduziert den technischen Aufwand bei der Herstellung von Axialflussmotoren und somit deren Kosten erheblich.

Grundsätzlich ist es zweckmäßig, dass zwischen den einzelnen Laminaten des Kerns eine elektrisch isolierende Schicht eingebracht ist. Bei üblichen Transformatorenblechen und Spulenkernen in üblichen Elektromotoren und Generatoren wird hierbei auf ein aus einer Folge ausgestanztem Magnetblech eine elektrisch isolierende Schicht aufgesprüht. Bei dem bandgegossenen pulvermetallurgischen Band kann ebenfalls bereits im Grünzustand eine hier refraktäre, also temperaturbeständige keramische Schicht, beispielsweise eine Metalloxid- oder eine Metallnitridschicht, zum Beispiel Aluminiumnitrit oder Aluminiumoxid oder Siliziumoxid, aufgebracht werden. Dies kann beispielsweise durch ein Sprühverfahren erfolgen. Diese so aufgebrachte elektrisch isolierende Schicht kann während des Sinterprozesses in situ mit verdichtet werden und erhält dabei ihre elektrisch isolierenden Eigenschaften. Diese elektrisch isolierende Schicht zwischen den einzelnen Laminatschichten des Kerns weist üblicherweise eine Dicke zwischen 1 µm und 5 µm auf und ist somit deutlich dünner als das weichmagnetische Band an sich, das bevorzugt zwischen 50 µm und 250 µm dick ist.

In einer anderen bevorzugten Ausgestaltungsform sind zweite Eisenpartikel, die die funktionalen Bestandteile der Rückschlussplatte bilden, anders ausgestaltet als erste Eisenpartikel, die die funktionalen Bestandteile des Bandes darstellen. Die zweiten Eisenpartikel weisen bevorzugt ein sogenanntes Core-Shell-Prinzip auf, wonach die Eisenpartikel im Kern (Core) von einer elektrisch isolierenden anorganischen Schicht (Shell) umgeben sind. Hierbei handelt es sich beispielsweise und bevorzugt um eine Aluminiumoxidschicht, um eine Siliziumoxidschicht, oder eine Zirkonoxidschicht, die ebenfalls sehr dünn ist und die bevorzugt eine Dicke zwischen 0,5 µm und 1 µm aufweist. Dieses Core-Shell-Prinzip bei dem zweiten Eisenpartikel bewirkt, dass bei einem Sinterprozess zwischen den aneinander gesinterten Körnern der Rückflussplatte im Grenzbereich eine leicht elektrisch isolierende anorganische Schicht übrigbleibt, die die elektrische Leitfähigkeit der Rückflussplatte und somit auch die magnetischen Flusseigenschaften im Vergleich zur Leitfähigkeit und Magnetflussfähigkeit des Kernmaterials etwas reduziert. Dies führt zu einem etwas höheren elektrischen Widerstand in der Rückflussplatte, was wiederum vorteilhaft ist, um magnetische Verluste in der Rückflussplatte so niedrig wie möglich zu halten.

In einer weiteren vorteilhaften Ausgestaltungsform erfolgt die pulvermetallurgische Formgebung zur Herstellung des Grünkörpers der Rückflussplatte mittels eines uniaxialen Pressverfahrens oder eines isostatischen Pressverfahrens oder eines Schlickergießverfahrens. Alle drei Verfahren sind bei der Herstellung von pulvermetallurgischen Bauteilen verbreitet, unterscheiden sich jedoch von dem Schlickerziehverfahren, das zur Darstellung des pulvermetallurgischen Bandes für die Kerne angewandt wird. Das heißt auch, dass beide Teilbauteile des Stators, also die Rückflussplatte und die Kerne, durch unterschiedliche Formgebungsverfahren im Grünzustand vorab hergestellt werden und jeweils für beide später integrierten Teilbauteile das hierfür kostengünstigste und zur Erzielung der gewünschten technischen Eigenschaften zweckmäßigste Verfahren gewählt werden kann.

Ferner ist es zweckmäßig, dass vor dem Sinterprozess des zusammengesetzten Statorgrünkörpers eine Wärmebehandlung desselben in Form eines Entbinderungsprozesses erfolgt. Grundsätzlich ist es jedoch auch zweckmäßig, dass sowohl die Kerngrünkörper als auch der Grünkörper der Rückflussplatte separat vor dem Vorfügen und vor dem Sinterprozess entbindert werden.

Ein weiterer Bestandteil der Erfindung ist ein Stator für einen Axialflussmotor mit einer metallischen Rückschlussplatte und darauf angebrachten metallischen Kernen, wobei die Rückschlussplatte in einer Einbaulage lotrecht zu einer Motorachse ausgerichtet ist und die Kerne parallel zur Motorachse verlaufen. Der Stator zeichnet sich dadurch aus, dass die Rückflussplatte und die Kerne durch eine Sinterverbindung stoffschlüssig verbunden sind und die Kerne eine Laminatstruktur aufweisen, wobei Normalen einer Laminatschicht senkrecht zur Motorachse verlaufen. Ferner sind einzelne elektrisch leitfähige Laminatschichten jeweils durch eine elektrisch isolierende Schicht getrennt dargestellt.

Der erfindungsgemäße Stator gemäß Anspruch 12 weist dieselben Vorteile auf, die bereits bezüglich des Verfahrens zur Herstellung des Stators beschrieben sind. Diese sind insbesondere die in situ Sinterverbindung zur stoffschlüssigen Verbindung zwischen Rückflussplatte und Kernen, die sich positiv auf die elektrischen Eigenschaften und auf die Wärmeausbreitung im Stator auswirken und somit einen effektiveren und günstig herzustellenden Axialflussmotor erlauben.

Ferner ist es zweckmäßig, dass die Rückschlussplatte durch eine Sintermetallstruktur gebildet ist, wodurch (anders als beispielsweise einer Gussstruktur oder einer Stanzstruktur) die Sinterverbindung zwischen dem Kern und der Rückflussplatte erst ermöglicht wird und hierdurch sich auch wiederum die beschriebenen Vorteile des Stators des Axialflussmotors ergeben.

Ferner ist es, wie bereits bezüglich des Verfahrensanspruchs beschrieben, zweckmäßig, dass die Rückschlussplatte eine geringere elektrische Leitfähigkeit aufweist als das Material des Kernes. Dies wird beispielsweise und insbesondere durch die Verwendung von zweiten Eisenpartikeln ermöglicht, die nach dem sogenannten Core-Shell-Prinzip aufgebaut sind.

Ein weiterer Bestandteil der Erfindung ist ein Axialflussmotor, der einen Stator umfasst, der nach einem der Ansprüche 1 bis 11 hergestellt ist oder der einen Stator umfasst, der nach einem der Ansprüche 12 bis 14 beschrieben ist.

Weitere Ausgestaltungsformen und weitere Beispiele und Merkmale werden anhand der folgenden Figuren näher beschrieben. Dabei handelt es sich um rein exemplarische Ausgestaltungsformen, die keine Einschränkung des Schutzbereichs darstellen. Dabei werden Merkmale mit derselben Bezeichnung auch in unterschiedlichen Ausgestaltungsformen mit denselben Bezugszeichen versehen.

Dabei zeigen:
- Figur 1: eine Explosionsdarstellung eines Axialflussmotors mit Statorspulen und Rotor,
- Figur 2a bis 2g: eine schematische Darstellung des Verfahrens zur Herstellung des Stators für den Axialflussmotor,
- Figur 3a und 3b: vergrößerte Darstellungen der Teilfiguren 2d und 2g,
- Figur 4: eine schematische Darstellung der Sinterverbindung zwischen Rückflussplatte und den Kernen,
- Figur 5: einen vergrößerten Ausschnitt aus dem Detail V in Figur 4, dass die Mikrostruktur der Rückflussplatte im Core-Shell-Prinzip abbildet.

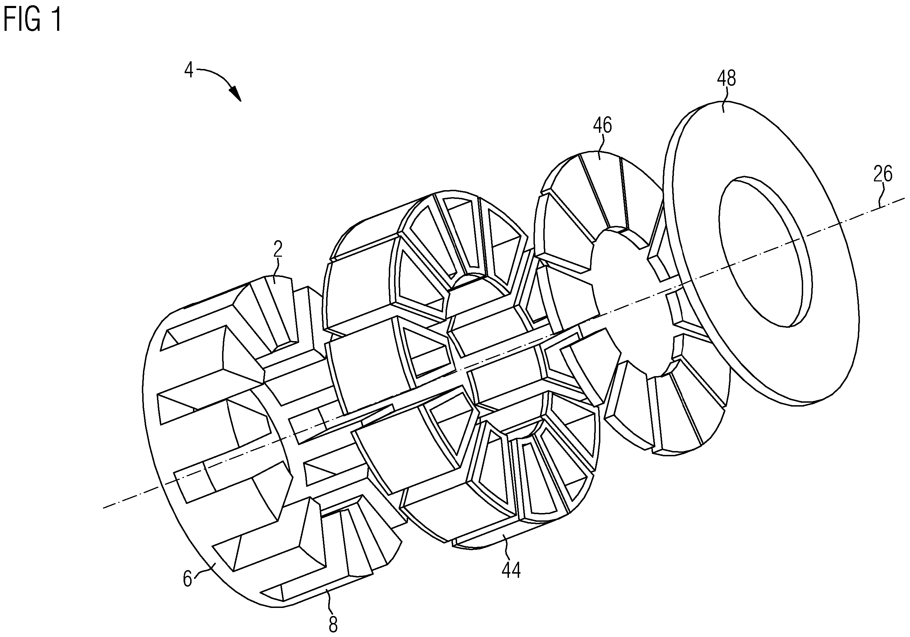

Der in Figur 1 gegebene schematische Aufbau eines Axialflussmotors 4 umfasst dabei zunächst einen Stator 2, der sowohl eine Rückflussplatte 6 als auch darauf angeordnete Kerne 8 aufweist. Auf die Kerne 8 ist im Zusammenbau des Axialflussmotors 4 jeweils auf eine Spule 44 aufgebracht. Kerne 8 und Spule 44 verlaufen dabei entlang einer Motorachse 26, die auch die Rotorachse darstellt. Ein Rotor 48 weist dabei Permanentmagnetplatten 46 auf, die auf dem Rotor 48 angeordnet sind. Der Stator 2 ist in diesem Fall in Form eines einrotorigen Axialflussmotors ausgestaltet, grundsätzlich könnten die Kerne 8 ausgehend von der Rückflussplatte 6 auch in die entgegengesetzte Richtung entlang der Motorachse 26 verlaufen.

In diesem Fall wäre ein zweiter Rotor 48 angebracht, sodass es sich um einen Doppelrotor-Motor handelt. Das im Folgenden beschriebene Herstellungsverfahren für den Stator 2 wäre analog auch für einen Doppelrotor-Motor anwendbar.

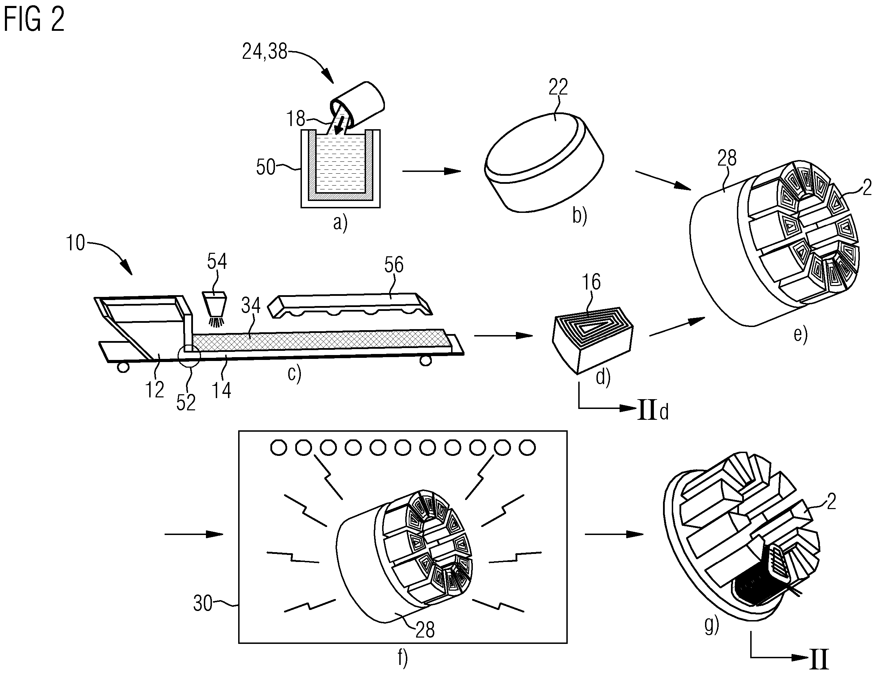

In Figur 2 ist das Verfahren zur Herstellung des beschriebenen Stators 2 schematisch veranschaulicht. Hierbei erfolgt im oberen Teil der Figur 2 eine parallele Herstellung der Rückflussplatte mit den Teilfiguren 2a und 2b und mit den Teilfiguren 2c und 2d die schematische Herstellung des Kernes 8 bzw. des Kerngrünkörpers 16.

In Figur 2a wird mittels eines Formgebungsverfahrens 24 für pulvermetallurgische Bauteile, hier ausgestaltet in Form eines Schlickergießverfahrens 38, ein Grünkörper 22 für die Rückflussplatte 6 hergestellt. Hierbei wird eine pulvermetallurgische Masse 18, die als Schlicker ausgebildet ist und eine entsprechend niedrige Viskosität aufweist, in eine Gießform 50 gegossen, wobei die Gießform 50 aufgrund ihrer porösen Ausgestaltung der pulvermetallurgischen Masse 18 flüssige Bestandteile entzieht, wodurch diese sich zu dem Grünkörper 22 verfestigt. Grundsätzlich wäre es an dieser Stelle auch möglich, den Grünkörper 22 der Rückflussplatte 6 durch ein uniaxiales Pressverfahren oder durch ein isostatisches Pressverfahren herzustellen. In diesem Falle hätte die pulvermetallurgische Masse eine höhere Viskosität bzw. eine Pulverform. Die pulvermetallurgische Masse weist jedoch in allen Fällen in der Regel sogenannte Bindemittel auf, die die Festigkeit des Grünkörpers 22 und somit seine Handhabbarkeit für die weiteren Prozessschritte verbessern.

In einem parallelen Prozess wird gemäß der Figuren 2c und 2d mittels eines sogenannten Bandgießverfahrens 10 (das in der Literatur auch als Green-Tape- oder Grün-Tape-Verfahren bezeichnet wird) mittels eines Schlickers 12 (der sich von dem beispielhaften Schlicker der pulvermetallurgischen Masse 18 in Figur 2a unterscheidet) ein pulvermetallurgisches Band 14 gezogen. Hierzu wird in der Regel ein Rakel 52 angewandt, wobei das Band 14 auf einer ebenen Oberfläche entsprechend ausgebreitet wird. Grundsätzlich ist es bereits in diesem Zustand möglich, auf die Oberfläche des pulvermetallurgischen Bandes 14 mittels einer Sprühvorrichtung 54 eine refraktäre Schicht 34, beispielsweise in Form von Aluminiumoxid oder Siliziumoxid oder eines Aluminiumnidrits aufzusprühen. Das Band 14 wird im Weiteren mittels einer Trocknungsvorrichtung 56 getrocknet und gemäß Figur 2d zu einem Kerngrünkörper 16 gewickelt. Grundsätzlich wäre es auch möglich, aus dem Band 14 einzelnen Laminatstrukturen auszuschneiden oder auszustanzen und diese durch übereinanderliegendes Laminieren zu dem Kerngrünkörper 16 zu formen. Das hier nicht dargestellte Wickeln des Kerngrünkörpers 16 aus dem Band 14 hat jedoch den Vorteil, dass der Stanz- und Laminierprozess eingespart werden kann, wobei jedoch die mechanischen und elektrischen Eigenschaften des Kerngrünkörpers 16 bzw. des späteren Kerns 8 erhalten bleiben bzw. sogar noch verbessert werden. Dies führt zu Einsparungen, somit zu einer Kostenreduktion bei der Herstellung des Stators 2 und somit des Axialflussmotors 4.

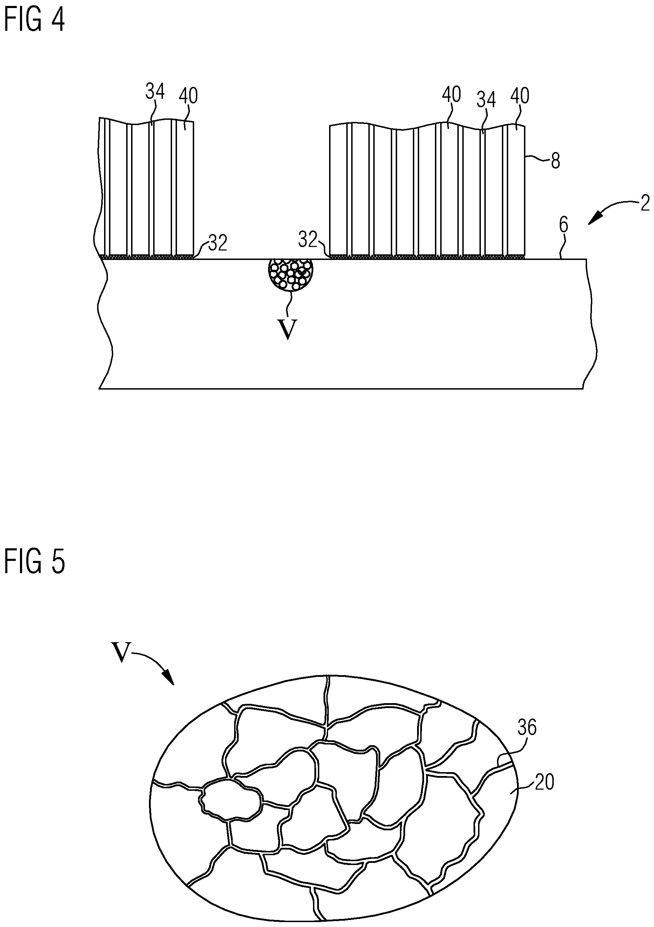

Die pulvermetallurgische Masse 18, aus der Grünkörper 22 der Rückflussplatte gebildet werden und der Schlicker 12, der zu dem pulvermetallurgischen Band 14 gezogen wird, unterscheiden sich insbesondere in ihren funktionalen Bestandteilen. Der Schlicker 12 weist neben Bindemitteln und Fluidmitteln Eisenpartikel auf. Diese sind insbesondere Reineisen-Partikel aus denen nach dem Sinterprozess ein Material mit besonders guten weichmagnetischen Eigenschaften resultiert. Diese Eisenpartikel werden zur besseren Unterschidung erste Eisenpartikel genannt. Zur Erzeugung einer erweiterten Texturierung sind die ersten Eisenpartikel anisotrop geformt, das heißt, sie sind beispielsweise in Form von Plättchen oder Stäbchen geformt und sind bereits während des Bandziehens entsprechend im Band ausgerichtet. Im Gegensatz dazu sind die funktionalen Bestandteile der Masse 18 zwar ebenfalls Eisenpartikel, die aber mit einer elektrisch isolierenden anorganischen Schicht 36 versehen sind, was als Core-Shell Prinzip bezeichnet wird. Diese Eisenpartikel werden als zweite Eisenpartikel 20 bezeichnet, auf diese wird in Bezug auf Figur 5 noch eingegangen.

Nach den beiden beschriebenen Teilverfahren ist somit eine Mehrzahl von Kerngrünkörpern 16 sowie ein Grünkörper 22 für die Rückflussplatte 6 dargestellt, die in einem weiteren Verfahrensschritt nach Figur 2e zu einem Statorgrünkörper zusammengefügt werden. Hierbei kann ein Haftvermittler zwischen den einzelnen Grünkörpern zum Einsatz kommen, die Kerngrünkörper 16 können jedoch auch lediglich auf den Grünkörper 22 aufgelegt werden. Im Weiteren erfolgt eine Wärmebehandlung gemäß Figur 2f, wobei der Statorgrünkörper 28 gegebenenfalls zunächst einem Entbinderungsprozess, bei dem Bindemittel thermisch zersetzt und ausgegast werden, zum Einsatz kommt, was hier nicht gesondert grafisch dargestellt ist, und bei dem mittels eines Sinterprozesses 30 eine in Figur 4 dargestellte Sinterverbindung 32 entsteht. Die Sinterverbindung 32 stellt eine stoffschlüssige Verbindung dar, durch den Sinterprozess geht der Statorgrünkörper 28 in den Stator 2 über. In Figur 2g ist nun ein fertig gesinterter Stator 2, der durch das beschriebene Verfahren erzeugt ist, dargestellt.

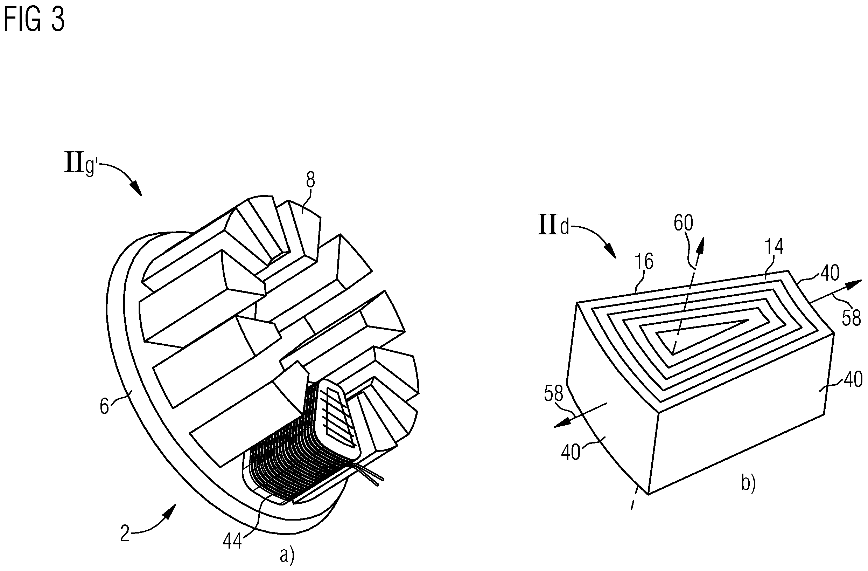

Eine vergrößerte Darstellung des Stators 2 nach Figur 2g ist mit der Bezeichnung IIg in Figur 3a dargestellt. Hier ist auf der Rückflussplatte 6 eine Mehrzahl von Kernen 8 angeordnet, die im Weiteren von jeweils einer Spule 44 umgeben sind. In der Figur 3b ist noch einmal eine vergrößerte Darstellung des zu dem Kerngrünkörpers 16 gewickelten Bandes 14 gegeben.

Damit bildet das Band 14 im Weiteren eine Laminatschicht 40, die hier jedoch nicht in einzelnen getrennten Laminaten vorliegt, sondern eben das zu dem Kerngrünkörper 16 gewickelte Band 14 beschreibt, wobei Normalen 58 der Laminatschicht 40 wiederum senkrecht zur Motorachse 26 verlaufen. Eine Wickelachse 60 des Kerngrünkörpers 16 wiederum verläuft entlang der Motorachse.

In Figur 4 ist eine schematische Darstellung des Übergangs und der Teilstrukturen der einzelnen Komponenten, dem Kern 8 und der Rückflussplatte 6, des Stators 2 schematisch veranschaulicht. Zunächst ist die Sinterverbindung 32 im Übergangsbereich zwischen dem Kern 8 und der Rückflussplatte 6 schraffiert dargestellt. Es handelt sich hierbei durch eine stoffschlüssige Verbindung, die anhand von Diffusionsprozessen einzelner Atome, insbesondere eines der Eisenatome des ehemaligen Kerngrünkörpers 16 und des Grünkörpers 22 der Rückenplatte 6 entsteht. Diese Diffusionsprozesse entstehen während des Sinterprozesses 30. Der Sinterprozess 30 wird dabei thermisch in der Art geführt, dass kein Schmelzvorgang im vollständigen Sinne der ersten Eisenpartikel und der zweiten Eisenpartikel auftreten. Dabei sind die ersten Eisenpartikel die funktionalen Bestandteile des Kernmaterials und die zweiten Eisenpartikel sind die funktionalen Bestandteile des Materials der Rückflussplatte 6. Ein Sinterprozess wird dabei so geführt, dass zwar gelegentlich flüssige Phasenanteile der funktionalen Bestandteile auftreten, im Wesentlichen jedoch eine diffusionsgesteuerte Verdichtung der einzelnen Partikel im Grünzustand zum Sinterzustand erfolgen.

In Figur 4 ist ferner der laminierte Aufbau des Kerns 8 dargestellt, wobei die Laminatschichten 40 des Kerns jeweils durch eine refraktäre, anorganische Schicht 34 getrennt vorliegen. Die refraktäre Schicht 34, die elektrisch isoliert, dient zur Minimierung von Wirbelstromverlusten, sodass der magnetische Fluss optimal im Inneren entlang der Laminatschicht 40 verläuft, was besonders die magnetischen Eigenschaften und das Drehmoment des Axialflussmotors verbessert. Der magnetische Fluss, der hier nicht explizit eingezeichnet ist, muss zwischen einzelnen Kernen 8 geschlossen werden, was über die Rückflussplatte 6 erfolgt. Dabei ist es jedoch wiederum zweckmäßig, dass der elektrische magnetische Fluss durch die Rückflussplatte 6 geringer ist, als er in den Kernen entlang der Motorachse ausgeprägt ist. Dies ist vorteilhaft, um weitere elektrische magnetische Flüsse zu vermindern und somit ebenfalls die Leistungsfähigkeit des Motors zu erhöhen. Aus diesem Grund besteht die Rückflussplatte 6 aus anderen, nämlich zweiten Eisenpartikeln 20, die mit einer anorganischen Schicht 36 umgeben sind. Diese zweiten Eisenpartikel 20 unterscheiden sich von hier nicht dargestellten ersten Eisenpartikeln im Kern 8 bzw. im Kerngrünkörper 16, die bevorzugt aus Reineisen oder Eisenpartikeln mit geringen Legierungsbestandteilen unter vier Prozent ausgestaltet sind, darin, dass diese zweiten Eisenpartikel 20 nach einem sogenannten Core-Shell-Prinzip aufgebaut sind.

Im Inneren der zweiten Eisenpartikel 20 befindet sich ebenfalls bevorzugt Eisen, bevorzugt auch in Reinform, es wird jedoch durch die Isolierschicht 36 umgeben, die eine dünne elektrische Isolierung zwischen den einzelnen Körnern der zweiten Eisenpartikel 20 erzeugt. Somit wird auch im Sintervorgang, der zusammen mit dem Sintervorgang des Kernes in situ erfolgt, eine geringere Verdichtung des Materials der Rückflussplatte 6 bewirkt, was auch in einer geringeren elektrischen Leitfähigkeit der Rückflussplatte 6 resultiert, wodurch der magnetische Fluss, wie bereits beschrieben, in der Rückflussplatte etwas reduziert wird, um Wirbelstromverluste in der Rückflussplatte zu minieren.

### Bezugszeichenliste

- 2: Stator
- 4: Axialflussmotor
- 6: Rückflussplatte
- 8: Kern
- 10: Bandgießen
- 12: Schlicker
- 14: pulvermetallergisches Band
- 16: Kerngrünkörper
- 18: pulvermetallergische Masse
- 20: zweite Eisenpartikel
- 22: Grünkörper Rückflussplatte
- 24: Formgebungsverfahren
- 26: Motorachse
- 28: Statorgrünkörper
- 30: Sinterprozess
- 32: Sinterverbindung
- 34: refraktäre Schicht
- 36: anorganische Schicht
- 38: Schlickergießverfahren
- 40: Laminatschicht
- 42: Normalen
- 44: Spulen
- 46: Magnetplatten
- 48: Rotor
- 50: Form
- 52: Rakel
- 54: Sprühvorrichtung
- 56: Trocknungsvorrichtung
- 58: Normal Laminatschicht
- 60: Wickelachse

## Patentansprüche

1. Verfahren zu Herstellung eines Stators (2) eines Axialflussmotor (4) mit mehreren auf einer Rückflussplatte (6) axial ausgerichteten Kernen (8), umfassend folgende Schritte:
- Bandgießen (10) eines Schlickers (12) zu einem pulvermetallurgischen Band (14) im Grünzustand,
- wobei der Schlicker (12) als funktionale Bestandteile erste Eisenpartikel umfasst,
- Herstellen eines Kerngrünkörper (16) mittels Laminierens des pulvermetallurgischen Bandes (14),
- erzeugen einer pulvermetallurgische Masse (18), die als funktionale Bestandteile zweite Eisenpartikel (20) umfasst,
- Herstellen eines Grünkörpers (22) der Rückflussplatte (6), mittels eines pulvermetallurgischen Formgebungsverfahrens (24),
- Aufsetzen der Kerngrünkörper (16) auf den Grünkörper (22) der Rückschlussplatte (6) in der Art, dass Normalen des laminierten Bandes (14) im Kerngrünkörper (16) in einer Ebene senkrecht zur Motorachse (26) verlaufen, wodurch ein Statorgrünkörper (28) erzeugt wird,
- Wärmebehandlung des Statorgrünkörpers (28) in Form eines Sinterprozesses (30), wodurch eine stoffschlüssige Sinterverbindung (32) zwischen Kerngrünkörper (16) und Grünkörper (22) der Rückflussplatte (6) erzeugt wird und der Statorgrünkörper (28) in den Stator (2) übergeführt wird.

2. Verfahren nach Anspruch 1, **dadurch gekennzeichnet, dass** das Laminieren des Bandes (14) zum Kerngrünkörper (16) in Form eines Wickelprozesses erfolgt.

3. Verfahren nach Anspruch 1 oder 2, **dadurch gekennzeichnet, dass** das Band (14) im Grünzustand mit einer elektrisch isolierenden refraktären Schicht (34) versehen ist.

4. Verfahren nach Anspruch 3, **dadurch gekennzeichnet, dass** die Schicht (34) eine Metalloxid- oder eine Metallnitrid-Schicht ist.

5. Verfahren nach einem der vorhergehenden Ansprüche, **dadurch gekennzeichnet, dass** die Dicke der elektrisch isolierenden Schicht (34) zwischen 1 µm und 5µm beträgt.

6. Verfahren nach einem der vorhergehenden Ansprüche, **dadurch gekennzeichnet, dass** die Dicke des Bandes (14) zwischen 50 µm und 250 µm beträgt.

7. Verfahren nach einem der vorhergehenden Ansprüchen, **dadurch gekennzeichnet, dass** die zweiten Eisenpartikel (20) nach einem Core-Shell-Prinzip mit einer elektrisch isolierenden anorganischen Schicht (36) versehen sind.

8. Verfahren nach Anspruch 6, **dadurch gekennzeichnet, dass** die anorganische Schicht (36) eine Aluminiumoxid, eine Siliziumoxid- oder eine Zirkonoxidschicht ist.

9. Verfahren nach Anspruch 6 oder 7, **dadurch gekennzeichnet, dass** die anorganische Schicht (36) eine Dicke zwischen 0,5 µm und 1 µm aufweist.

10. Verfahren nach einem der vorhergehenden Ansprüche, **dadurch gekennzeichnet, dass** das pulvermetallurgische Formgebungsverfahrens (24) zur Herstellung des Grünkörpers (22) der magnetischen Rückschlussplatte (Joch) (6), mittels eines uniaxialen Pressverfahrens oder eines isostatischen Pressverfahrens oder eines Schlickergießverfahren (38) erfolgt.

11. Verfahren nach einem der vorhergegangenen Ansprüche, **dadurch gekennzeichnet, dass** vor dem Sinterprozess (30) eine Wärmebehandlung des Statorgrünkörpers (28) in Form eines Entbinderungs-Prozesses erfolgt.

12. Stator eines Axialflussmotors (4) mit einer metallischen Rückschlussplatte (6) und darauf angebrachten metallischen Kernen (8), wobei die Rückschlussplatte (6) in einer Einbaulage lotrecht zu einer Motorachse (26) ausgerichtet ist und die Kerne 8 parallel zur Motorachse (26) verlaufen, **dadurch gekennzeichnet, dass**
- die Rückschlussplatte (6) und die Kerne (8) durch eine Sinterverbindung (32) stoffschlüssig verbunden sind und
- die Kerne eine Laminatstruktur aufweisen, wobei Normalen (42) einer Laminatschicht (40) senkrecht zur Motorachse (26) verlaufen und
- einzelne elektrisch leitfähige Laminatschichten (40) jeweils durch eine elektrisch isolierende Schicht (34) getrennt sind.

13. Stator nach Anspruch 12, **dadurch gekennzeichnet, dass** die Rückschlussplatte (6) durch eine Sintermetallstruktur gebildet ist.

14. Stator nach Anspruch 12 oder 13, **dadurch gekennzeichnet, dass** die Rückschlussplatte (6) eine geringere elektrische Leitfähigkeit aufweist als das Material der Kerne (8).

15. Axialflussmotor (4) umfassend einen Stator (2) nach einem der Ansprüche 12 bis 14 oder einen Stator (2) hergestellt nach einem Verfahren nach einem der Ansprüche 1 bis 11.
